# EUROPEAN PATENT APPLICATION

(11) **EP 2 174 708 A1**
(43) Date of publication of application: **14.04.2010**
(21) Application number: 07791888.6
(22) Date of filing: 27.07.2007
(51) Int. Cl.: B01J 20/34, B01J 20/20, C02F 1/28

(54) **METHOD OF REGENERATING CARBONACEOUS OIL ADSORBENT**

(71) Applicant: Nippon Oil Corporation, Tokyo 105-8412 (JP)
(72) Inventor: TANO, Tamotsu, Kuga-gun Yamaguchi 740-0061 (JP); TASAKI, Masayuki, Kuga-gun Yamaguchi 740-0061 (JP); OYAMA, Takashi, Kuga-gun Yamaguchi 740-0061 (JP); MUKAI, Kazuo, Kuga-gun Yamaguchi 740-0061 (JP); YANO, Norio, Kuga-gun Yamaguchi 740-0061 (JP); NAKANO, Susumu, Kuga-gun Yamaguchi 740-0061 (JP); SAKAMOTO, Akio, Kawasaki-shi Kanagawa 210-0867 (JP); FUJII, Masaki, Kawasaki-shi Kanagawa 210-0867 (JP)
(74) Representative: Grünecker, Kinkeldey, Stockmair & Schwanhäusser Anwaltssozietät
(86) International application number: PCT/JP2007/065214
(87) International publication number: WO 2009/016766

(57) **Abstract**

The present invention provides a method of regenerating an oil adsorbent, wherein an oil adsorbent even if containing a large amount of oil can be regenerated without taking it out from the facility. The method of regenerating an oil adsorbent comprises washing a carbonaceous oil adsorbent made from calcined coke, with oil adsorbed thereon, with warm water of 40°C or higher or gas-bubbled warm water of 40°C or higher.

## Description

### [Field of the Invention]

The present invention relates to a method of regenerating a carbonaceous oil adsorbent. More specifically, the present invention relates to a method of regenerating a carbonaceous oil adsorbent used for treating oil-containing effluents, with oil adsorbed thereon.

### [Background of the Invention]

It is often the case that an industrial or household effluent contains oils. For example, various facilities in an petroleum refining plant discharge oil-containing effluents. Vegetable oil manufacturing factories discharge effluents containing fats and oils, accompanying the production of soy bean oil, rape oil or cone oil. Further, manufacturing plants such as automobile plants, wherein many machine tools are used, often discharge effluents containing water soluble mineral oils because such mineral oils are used as cutting oils for lubricating and cooling the cut surfaces of processed goods. Moreover, food plants, hotels, or restaurants discharge effluents containing oils at a relatively higher concentration, originating from animal and vegetable oils. Therefore, in order to treat such oil-containing effluents, it is necessary to eliminate oils therefrom.

As a means for eliminating oils from effluents, activated carbons have been often used so far. However, when an activated carbon is used for effluent treatment and adsorbs a slight amount of oil, it can be regenerated by back washing using industrial water. However, for an activated carbon to which a large amount of oil is adsorbed, there is no alternative but to take out the activated carbon from the facility and regenerate it by steam activation which is very costly. As the result, it has been eagerly desired to provide a method of regenerating an adsorbent even though adsorbing a large amount of oils, without the necessity of taking out the adsorbent from the facility where it is used for treating effluents.

### [Disclosure of the Invention]

The present invention was accomplished in view of the above-described situations and provides a method of regenerating an oil adsorbent, wherein a specific carbonaceous oil adsorbent is used as an adsorbent and washed by a specific method thereby enabling the adsorbent to be washed efficiently without taking out the adsorbent from the oil adsorbing treatment facility.

That is, the present invention relates to a method of regenerating a carbonaceous oil adsorbent, comprising washing a carbonaceous oil adsorbent made from calcined coke, with oil adsorbed thereon, with warm water of 40°C or higher or gas-bubbled warm water of 40°C or higher.

The present invention also provides the foregoing method of regenerating a carbonaceous oil adsorbent, wherein the carbonaceous oil adsorbent is a calcined coke with a specific surface area of 20 m²/g or less, produced by calcining coke at a temperature of 1,000 to 1,500°C.

The method of the present invention has a great industrial significance because an oil absorbent even though adsorbing a large amount of oils can be regenerated without taking it out from the oil adsorbing treating facility.

### [Best Mode for Carrying out the Invention]

The present invention will be described in more detail.

The carbonaceous oil adsorbent used in the present invention is made from a calcined coke produced by subjecting a carbonaceous material to calcination.

There in no particular restriction on the carbonaceous material used as the raw material of the adsorbent. However, it is preferred to use non-porous materials such as cokes and graphites (including expanded graphites) and particularly preferred to use cokes because they can provide the resulting adsorbent with surface properties that water is easily desorbed and oil is easily adsorbed.

There is no particular restriction on cokes preferably used in the present invention. Examples of the cokes include coal- or petroleum-based cokes produced using heavy oils such as topped crude, vacuum residue, tar sand, bitumen, shale oil, and residue from fluid catalytic cracking units, coal tar, and coal tar pitch as the raw material; and charcoal-based cokes produced using wood, saw dust, and coconut husk as the raw material. These materials may be used alone or in combination. There is no particular restriction on the coking process for producing the coke, which may, therefore, be any process such as fluid coking, flexicoking, or delayed coking process. The heating temperature during the coking process is usually from 400 to 600°C. In the present invention, it is preferred to use needle coke produced through a delayed coking process.

The heating temperature at which the carbonaceous material is calcined is preferably from 1,000 to 1,500°C, more preferably from 1,200 to 1450°C, and more preferably 1, 300 to 1, 400°C. A heating temperature of lower than 1,000°C would fail to provide the surface of the resulting oil adsorbent with sufficient hydrophobicity while a heating temperature in excess of 1,500°C would make it difficult to achieve a hydrophilicity-hydrophobicity balance wherein the resulting oil adsorbent is likely to desorb water and adsorb oils on its surface. The time for calcining the carbonaceous material is preferably from 1 minute to 5 hours, more preferably from 5 minutes to 3 hours.

The heating rate at which the carbonaceous material is heated to the forgoing heating temperature is preferably from 180 to 220°C/h so that the calcination process can be carried out efficiently.

The calcination of the carbonaceous material may be carried out using a horizontal calcining apparatus such as a rotary kiln or an upright calcining apparatus such as a Riedhammer furnace or a rotary hearth (rotary hearth type calciner).

There is no particular restriction on the atmosphere under which the calcination is carried out as far as the polar group can be eliminated from the carbonaceous material surface. However, the calcination is preferably carried out under an inert gas atmosphere such as nitrogen.

When the calcined coke is cooled after the calcination, the temperature near the outlet of the calcining apparatus is preferably 500°C or lower, more preferably 300°C or lower with the objective of prohibiting the oxidation of the calcined coke and suppressing the production of polar groups. There is no particular restriction on the method of cooling the calcined coke. Natural cooling by allowing the calcined coke to stand may be carried out. However, with the objective of further improving the treatment efficiency, forced cooling such as water cooling is preferably carried out.

For example, when a coal-, petroleum-, or charcoal-based coke is calcined at a temperature of 1,000 to 1,500°C, the resulting calcined coke has a BET surface area of usually 20 m²/g or less, preferably 1 to 10 m²/g. As just described, the calcined coke used in the present invention is smaller in surface area than the conventional activated carbon and activated coke. However, according to the studies carried out by the inventors of the present invention, an adsorbent made from the calcined coke exhibits higher adsorbability to the oils in an oil-containing effluent than the conventional activated carbon and activated coke. This comparison suggests that the adsorbability of the adsorbent of the present invention is caused by the surface properties modified by calcination.

There is no particular restriction on the method of contacting the carbonaceous oil adsorbent made from calcined coke, used in the present invention (hereinafter may be referred to as "the adsorbent") with an oil-containing effluent. For example, a method may be employed wherein the adsorbent is filled into a treatment tank similar to an activated carbon adsorption tank which has been used for the conventional effluent treatment and then an oil-containing effluent is allowed to flow through the tank. In this case, the treatment conditions such as the amounts of the adsorbent to be filled and effluent to be flowed and the treating temperature may be appropriately selected, considering the adsorbability of the adsorbent or the oil content in the effluent. Effluent may be flowed downwardly or upwardly. However, a downward flow is preferable because the regeneration of the adsorbent by back washing (upflow) is easily carried out.

When an oil-containing effluent is allowed to flow through the treatment tank filled with the adsorbent, treatments such as filtration, biological treatment, coagulation, and chemical oxidation (ozone oxidation) may be suitably combined so as to eliminate suspended solids (SS) and other substances such as COD and BOD contained in the oil-containing effluent. In particular, when an oil-containing effluent contains substances such as SS, exhibiting adsorptivity to the carbonaceous material, the SS is preferably eliminated by sand filtration before the effluent is contacted with the adsorbent. If an effluent containing SS is contacted with the adsorbent as it is, the adsorbability of the adsorbent would be diminished with the SS.

When an effluent contains a large amount of oils, the oils are preferably eliminated by an oil-water separation operation as much as possible before the effluent is contacted with the adsorbent. The conventional activated carbon and activated coke do not exhibit sufficient adsorbability to oils when the effluent is an emulsion or contains oils at a low concentration. However, the adsorbent exhibits excellent adsorbability even for such an emulsion or effluent containing a low concentration of oils and thus can efficiently perform oil elimination from an effluent with a high degree of accuracy in combination with the above-described oil-water separation operation.

In the present invention, the carbonaceous oil adsorbent made from calcined coke, with oils adsorbed thereon, as described above is regenerated by washing with warm water of 40°C or higher or gas-bubbled warm water of 40°C or higher.

That is, in the present invention, warmed water is used as washing water upon regeneration of the adsorbent for the purpose of reducing the viscosity of the oils so that the desorption of the adsorbed oils is facilitated. The temperature of the washing water is 40°C or higher, preferably from 60 to 100°C. Bubbling of warm water with steam or nitrogen gas used in combination can further enhance the desorption efficiency of oils or the like by the action of bubbles.

It is not known exactly why the desorption of the adsorbed oil can be easily facilitated by allowing warm water of 40°C or higher to act on the adsorbent of the present invention with oils adsorbed thereon. However, it is assumed that since the adsorbent of the present invention is of a structure mainly composed of large pores or clacks of 50 nm to 300 µm, corresponding to macropores, unlike the conventional fine pores mainly composed of micropores, and of a structure having a specific surface area of 20 m²/g or less, unlike the conventional adsorbent, oils are adsorbed in the macropores and thus are more easily contacted with the washing water used upon regeneration, compared with the conventional activated carbon mainly composed of micropores.

In the present invention, the washing (regeneration) may be carried out without taking out the oil adsorbent from the oil adsorbing facility.

The washing water may be flowed downwardly or upwardly. However, back washing (upflow) is preferable because it makes it easier to regenerate the adsorbent.

There is no particular restriction on the mode of washing as long as it allows for washing with warm water of 40°C or higher or gas-bubbled warm water of 40°C or higher. The mode may be of a batch type or a circulation type.

For example, for batch type bubbling, a method may be employed wherein steam or nitrogen gas is circulated from a lower part of a layer formed by filling the adsorbent, filled up with warm water, which is then removed. Alternatively, a method may be employed wherein the adsorbent which is broken through is taken into a separate vessel into which warm water is added, and is washed, while the warm water is bubbled by stirring or circulating therethrough steam or nitrogen gas, followed by removal of the warm water.

In a circulation type washing, a method may be employed wherein gas and washing water are circulated at a gas/washing water volume ratio of usually 0.01 to 10, preferably 0.1 or greater.

Although the adsorbent has itself an effect of dispersing gas, porous dispersing plates may be arranged in a lower part of the filled adsorbent layer.

### [Applicability in the Industry]

The method of the present invention is of a large industrial value because an oil adsorbent, even if containing a large amount of oil can be regenerated without taking it out from an oil adsorbing treatment facility.

### [Examples]

The present invention will be further described in the following examples, but the present invention should not be construed as being limited thereto.

### [Example 1]

Under an inert gas atmosphere, needle coke (S-JA calcined powder coke) was heated to a temperature of 1,300°C at a heating rate of 3 to 4°C per minute and calcined at 1,300°C for 4 hours. Thereafter, the needle coke was forcedly cooled with water, and allowed to pass through the outlet of the calciner, the temperature of which outlet was maintained at 120°C thereby producing a calcined coke with a BET surface area of 3 m²/g. Into a column (volume: 150cc) was filled 100 cc of the calcined coke, and then water containing oils was flowed into the column until the calcined coke was broken through. The total amount of the oil adsorbed on the calcined coke was 45,000 mg/L.

Thereafter, washing water of 60°C was flowed upwardly at a rate of 100 cc/minute to the column filled with the calcined coke having been broken through by the effluent treatment. The amount of the oil remaining in the regenerated adsorbent was 5,700 mg/L. Therefore, the amount of the desorbed oil was 39,300 mg/L, and thus the oil desorption rate was 87 percent which indicates that an excellent desorbability was exhibited.

### [Example 2]

The procedures of Example 1 were followed except that nitrogen was flowed from a lower part of the layer of the filled calcined coke at a rate of 100 cc/minute, while being bubbled and washing water of 60°C was flowed upwardly at a rate of 100 cc/minute. The amount of the oil remaining in the regenerated adsorbent was 1,500 mg/L. The oil desorption rate was 97 percent, thereby confirming that an excellent effect by steam bubbling was attained.

### [Example 3]

The procedures of Example 1 were followed except that the temperature of the washing water was changed to 100°C. The amount of the oil remaining in the regenerated adsorbent was 4,000 mg/L. The oil desorption rate was 91 percent, thereby confirming that an advantageous effect was attained by increasing the temperature of the washing water.

### [Example 4]

The procedures of Example 1 were followed except that washing water of 100°C was flowed, while being steam-bubbled. The amount of the oil remaining in the regenerated adsorbent was 400 mg/L. The oil desorption rate was 99 percent, which indicates that an excellent desorbability was exhibited.

### [Comparative Example 1]

The procedures of Example 1 were followed except that the temperature of the washing water was changed to 20°C. The amount of the oil remaining in the regenerated adsorbent was 15,400 mg/L. The oil desorption rate was 66 percent, which indicates that the desorbability was poorer than that of Example 1.

### [Comparative Example 2]

The procedures of Example 1 were followed except that the temperature of the washing water was changed to 30°C. The amount of the oil remaining in the regenerated adsorbent was 14,000 mg/L. The oil desorption rate was 69 percent, which indicates that the desorbability was poorer than that of Example 1.

### [Comparative Example 3]

A commercially available activated carbon (trade name: Taiko Activated Carbon GM130A, manufactured by Futamura Chemical Co., Ltd., BET surface area: 1,000 m²/g) was used as an adsorbent. Into a column (volume: 150 mL) was filled 100 mL of this commercially available activated carbon, and then water containing oils was flowed into the column until the activated carbon was broken through. The total amount of the oil adsorbed on the activated carbon was 15, 300 mg/L. The activated carbon which had been broken through was regenerated by flowing therethrough washing water of 30°C upwardly at a rate of 100 cc/minute. The amount of the oil remaining in the regenerated activated carbon was 5,200 mg/L. The oil desorption rate was 66 percent, which indicates that the desorbability was poorer than those of Example 1 to 4.

### [Comparative Example 4]

The procedures of Comparative Example 3 were followed except that washing water of 60°C was flowed, while being steam-bubbled. The amount of the oil remaining in the regenerated activated carbon was 4,700 mg/L. The oil desorption rate was 66 percent, which indicates that the desorbability was poorer than those of Example 1 to 4.

The results of Examples 1 to 4 and Comparative Examples 1 to 4 are summarized in Tables 1 and 2 below.

It is apparent from Tables 1 and 2 that an adsorbent can be regenerated easily and efficiently using the calcined coke according to the present invention as an adsorbent and a method of regeneration wherein the adsorbent is washed with warm water of 40°C or higher or gas-babbled warm water of 40°C.

**Table 1**

| Items | Before Regeneration | After Regeneration | | | | | |
|---|---|---|---|---|---|---|---|
| | | Example 1 | Example 2 | Example 3 | Example 4 | Comaparative Example 1 | Comaparative Example 2 |
| Washing water temperature °C | - | 60 | 60 | 100 | 100 | 20 | 30 |
| Steam bubbling | - | No | Yes | No | Yes | No | No |
| Remaining oil amount mg/L | 45000 | 5700 | 1500 | 4000 | 400 | 15400 | 14000 |
| Oil desorption amount mg/L | - | 39300 | 43500 | 41000 | 44600 | 29600 | 31000 |
| Oil desorption rate % | - | 87 | 97 | 91 | 99 | 66 | 69 |

**Table 2**

| Items | Before Regeneration | After Regeneration | |
|---|---|---|---|
| | | Comaparative Example 3 | Comaparative Example 4 |
| Washing water temperature °C | - | 30 | 60 |
| Steam bubbling | - | No | Yes |
| Remaining oil amount mg/L | 15300 | 5200 | 4700 |
| Oil desorption amount mg/L | - | 10100 | 10600 |
| Oil desorption rate % | - | 66 | 69 |

### [Example 5]

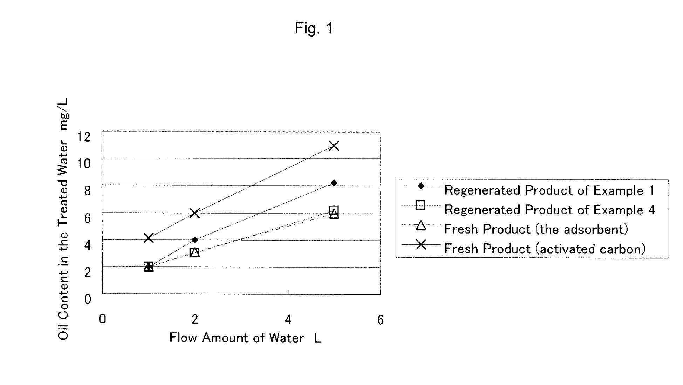

A comparative test of adsorbability was carried out using the adsorbents regenerated in Examples 1 and 4 and fresh adsorbents. That is, into a column was filled 50 cc of each of the regenerated adsorbents and fresh adsorbent, and water to be treated, containing fuel oils A and B in an amount of 150 mg per 1 L was flowed through the column. The amount of the oil in the treated water flowed through the column was measured. The results are set forth in Table 3 and Figure 1.

Table 3 and Figure 1 indicate that the regenerated products of Examples 1 and 4 exhibited oil adsorbability equivalent to that of the fresh calcined coke and superior to the fresh activated carbon.

**Table 3**

| Flow Amount of Water | Oil Content in Treated Water | | | | |
|---|---|---|---|---|---|
| | Regenerated Products | | | Fresh Products | |
| L | Regenerated Product of Example 1 | Regenerated Product Example 4 | Regenerated of Product of Comparative Example 1 | Adsorbent of the Invention | Activated Carbon |
| 1 | 2 | 2 | 2.8 | 2 | 4.1 |
| 2 | 4 | 3 | 4.9 | 3.1 | 6 |
| 5 | 8.2 | 6.2 | 9.8 | 6 | 11 |

### [Brief Description of the Drawing]

Fig. 1 is a graph showing the results of a comparative test for evaluating the oil adsorbability of regenerated products and fresh products.

## Claims

1. A method of regenerating a carbonaceous oil adsorbent, comprising washing a carbonaceous oil adsorbent made from calcined coke, with oil adsorbed thereon, with warm water of 40°C or higher or gas-bubbled warm water of 40°C or higher.

2. The method of regenerating a carbonaceous oil adsorber according to claim 1, wherein the carbonaceous oil adsorber is a calcined coke with a specific surface area of 20 m²/g or less, produced by calcining coke at a temperature of 1,000 to 1,500°C.
